# EUROPÄISCHE PATENTSCHRIFT

(11) **EP 2 061 976 B1**
(45) Veröffentlichungstag und Bekanntmachung des Hinweises auf die Patenterteilung: **18.08.2010**
(21) Anmeldenummer: 07802219.1
(22) Anmeldetag: 07.09.2007
(51) Int. Cl.: F16D 59/02

(54) **ELEKTROMAGNETISCHE BREMSE FÜR HANDLINGSSYSTEME**
ELECTROMAGNETIC BRAKE FOR HANDLING SYSTEM
FREIN ÉLECTROMAGNÉTIQUE POUR SYSTÈME DE CONDUITE D'UNE MACHINE

(30) Priorität: 16.09.2006 DE 102006043374
(43) Veröffentlichungstag der Anmeldung: 27.05.2009
(73) Patentinhaber: Chr. Mayr GmbH + Co. KG, 87665 Mauerstetten (DE); KUKA Roboter GmbH, 86165 Augsburg (DE)
(72) Erfinder: EIBAND, Karl, 87616 Marktoberdorf (DE); EIBERGER, Oliver, 80634 München (DE); HEINZE, Achim, 86152 Augsburg (DE)
(74) Vertreter: Ruschke, Hans Edvard
(86) Internationale Anmeldenummer: PCT/EP2007/007839
(87) Internationale Veröffentlichungsnummer: WO 2008/031538

(56) Entgegenhaltungen:
- EP-A- 0 077 032
- EP-A- 0 326 966
- DE-A1- 2 853 801
- DE-A1- 3 920 148

## Beschreibung

### Stand der Technik (siehe z.B. EP-A-326 966):

Elektromagnetisch, ruhestrombetätigte Federdruckbremsen gehören zum Stand der Technik. Vergleichbare Federdruckbremsen werden von der Anmelderin bereits seit 1970 auf den Markt gebracht, wie unter anderem aus dem Prospekt ROBA-stop, Elektromagnetische Sicherheitsbremsen/Federdruckbremsen hervorgeht. Bei dieser Konstruktion drückt im stromlosen Zustand, die mit einem Elektromagnetgehäuse drehstarr verbundene Ankerplatte, aufgrund von Federkräften, die Reibbeläge auf einem Rotor gegen die Gehäusewand einer Maschine, z.B. das Lagerschild eines Elektromotors. Die Anpressung der Ankerplatte erfolgt dabei über mehrere einstellbare Schraubenfedern. Die mit dem Rotor fest verbundenen Reibbeläge bremsen über die Nabe die Maschinenwelle. Bei erregtem Elektromagneten zieht dieser die Ankerplatte gegen den Federdruck an und gibt somit die Reibbeläge zur Rotation frei. Bei stromlosen Elektromagneten drückt die Ankerplatte unter Federdruck die Reibbeläge an die Gehäusewand. Das Elektromagnetgehäuse, d.h. der Spulenträger ist mit Befestigungsschrauben an der Gehäusewand angeschraubt. Der Abstand zwischen dem Spulenträger und der Gehäusewand wird durch feste Buchsen, festen Abstandsring, oder einem Flansch, verbunden mit dem Spulenträger, erzeugt.

In der DE 39 20 148 A1 der Anmelderin wird ebenfalls eine elektromagnetisch, ruhestrombetätigte Sicherheitsbremse/Federdruckbremse beschrieben. Hierbei wird allerdings hauptsächlich die Nachstellvorrichtung, bzw. Einstellvorrichtung für den Luftspalt zwischen Ankerscheibe und Spulenträger beschrieben. Bei dieser Art von Bremse wurde seinerzeit schon ein besonderer Wert auf eine kostengünstige und einfache Bauart gelegt, um in den Außenabmessungen und gewichtsmäßig so klein wie möglich zu sein.

### Aufgabenstellung:

In der Robotertechnik und bei Handlingssystemen ist es sehr wichtig, dass die Bauteile sehr klein bauen und gewichtsoptimiert sind. Ziel ist es, bei kleinster Bauweise ein hohes Drehmoment zu erhalten und die Bremse konstruktiv, z.B. in einen Roboterarm auf engstem Raum zu integrieren. So kam es zur Aufgabenstellung, eine Bremse zu entwickeln, welche an einen vorhandenen Robotermotor angebaut werden muss und auf engstem Raum ein möglichst hohes Bremsmoment zu erreichen. Die Hauptaufgabe bestand darin, den Magnetfluss zu optimieren, um eine möglichst hohe Magnetkraft zu erreichen, welche gegen den Federdruck für die Bremskraft arbeiten muss. Hierbei muss jedoch immer wieder das Gewicht der Bremse berücksichtigt werden.

### Lösung:

Es wurde eine Bremse geschaffen, welche mit einem magnetflussoptimierten Spulenträger arbeitet und zudem eine Gewichtsoptimierung besitzt. Die Gegenreibfläche der Bremse wird aus Aluminium vorgesehen, wobei auf der Reibfläche eine Scheibe aus reibfähigem Material eingeklebt wird. Die Gegenreibfläche ist als Flansch ausgebildet, welcher mit dem Spulenträger verschraubt wird und am Außendurchmesser vier Befestigungsbohrungen zum Anschrauben an den Roboterarm enthält. Um Material zu reduzieren wurden im Spulenträger keine Bohrungen für Federn vorgesehen, sondern am Außendurchmesser des Spulenträgers der freie Raum dafür genutzt, die Druckfedern auf einem Bolzen, welcher sich im Gegenflansch befindet, zu führen. Als Gegenanlage wird im Spulenträger nur ein dünner Bund verwendet. Die Federn liegen somit außen ringförmig um den Spulenträger im Freien und sind nicht im Material eingebettet.

Als Alternative wird vorgeschlagen den Gegenflansch aus Aluminium direkt als Motorgehäuse mit auszubilden, in welche dann der Rest der Bremse eingeschraubt wird.

Mit diesen konstruktiven Ausführungen der Bremse wird bei geringem Gewicht und angepasstem Platzbedarf ein hohes Drehmoment mit zuverlässiger Funktion erfüllt.

### Ausführungsbeispiel:

In den Zeichnungen sind Ausführungsbeispiele der Erfindung dargestellt:

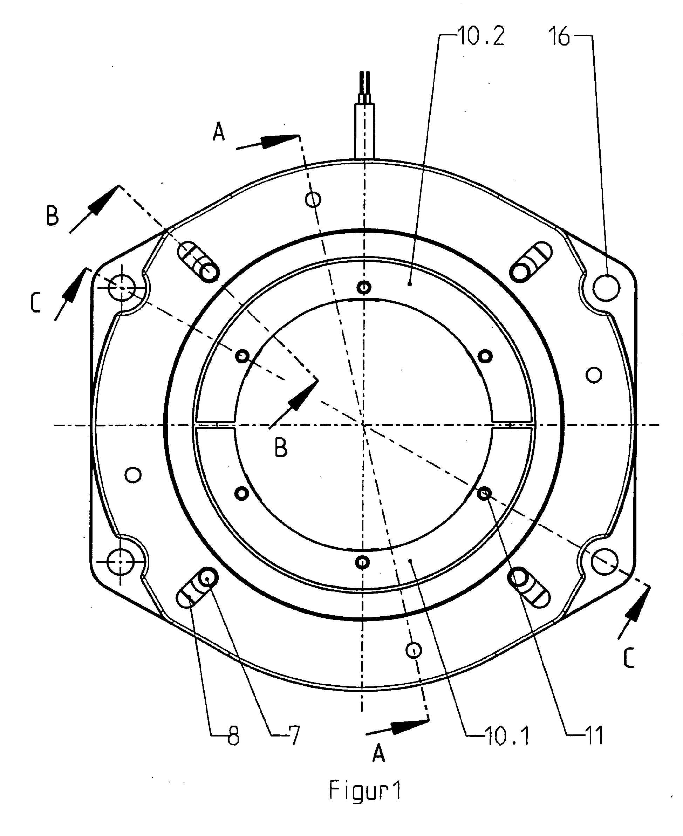

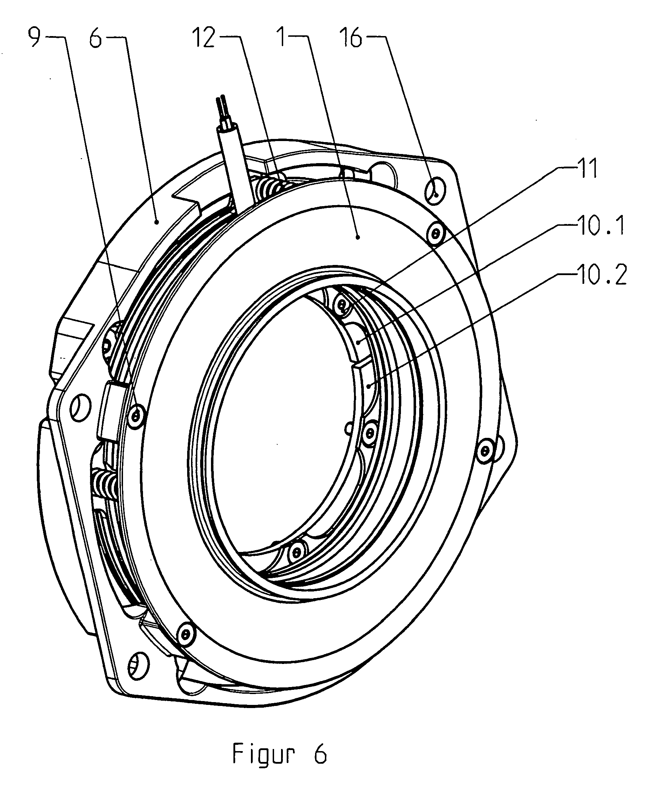

Figur 1 zeigt die Rückseite der Bremse mit den Befestigungsschrauben-Motor 7 in dem Langloch 8, sowie die Belagmitnehmerscheibe 10 (Fig. 6) mit geteiltem Distanzring 10.1 und 10.2 mit den Befestigungsschrauben-Belagmitnehmerscheibe 11 an der nicht dargestellten abzubremsenden Welle. An den Befestigungsbohrungen-Roboterarm 16 wird die Bremse am Roboterarm festgeschraubt.

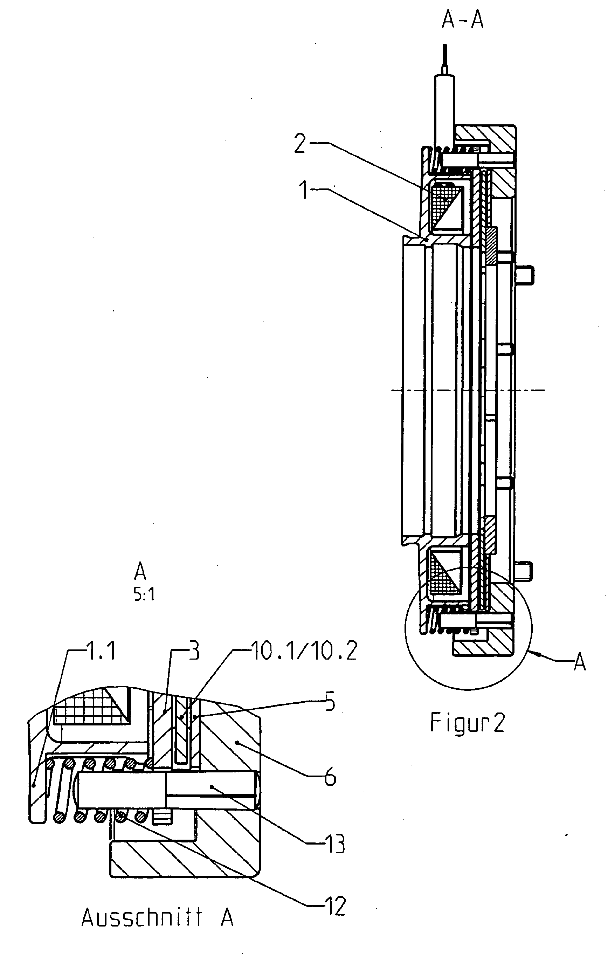

Figur 2 zeigt den Schnitt A-A mit der Spule 2 im Spulenträger 1. Im Ausschnitt A der Figur 2 werden die am Umfang verteilten Druckfedern 12, welche auf den Bolzen 13 geführt sind, welche im Gegenflansch 6 eingepresst sind, gezeigt. Die Ankerscheibe 3 ist axial beweglich in den Bolzen 13 geführt um beim Abbremsen das Bremsmoment zu übertragen. Die Reibscheibe 5 ist mit dem Gegenflansch 6 verklebt.

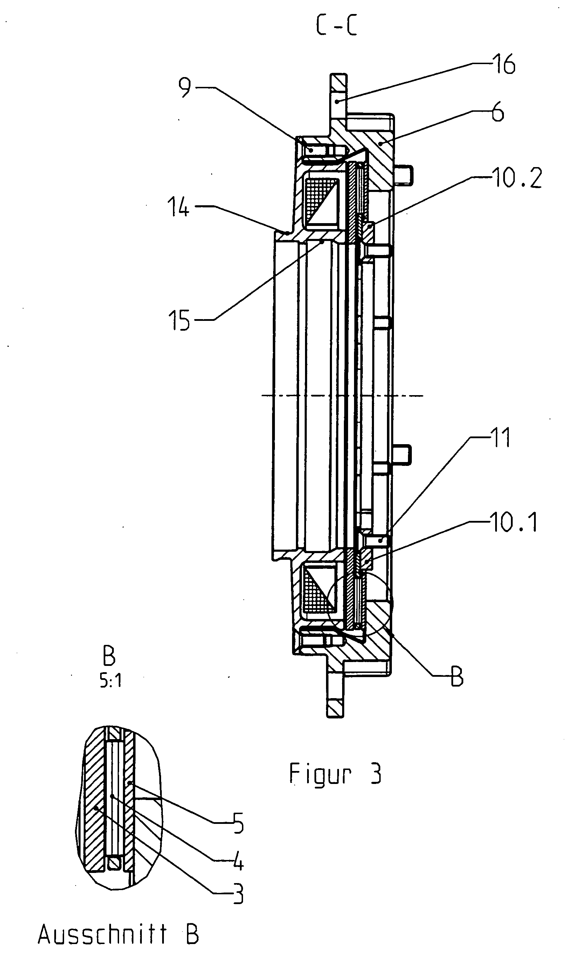

Figur 3 zeigt den Schnitt C-C mit einem Schnitt durch den Gegenflansch 6, an welchem die Befestigungsbohrungen-Roboterarm 16 dargestellt sind. Mit den Schrauben 9 wird der Gegenflansch 6 am Spulenträger 1 befestigt. Des weiteren ist im Schnitt die Belagmitnehmerscheibe 10 mit geteiltem Distanzring 10.1 und 10.2 und ihren Befestigungsschrauben-Belagmitnehmerscheibe 11 dargestellt, an welche die zu drehende Motorwelle angeschraubt wird. Die Ringnuten 14 und 15 in Spulenträger 1 sollen als Auffangfläche für Öl, Fett oder ähnliches dienen, damit die Reibfläche von diesen Medien fern gehalten bleibt. Ausschnitt B zeigt die Belagmitnehmerscheibe 10 mit den in Bohrungen befindlichen Reibbelagplättchen 4, zwischen Ankerscheibe 3 und Reibscheibe 5.

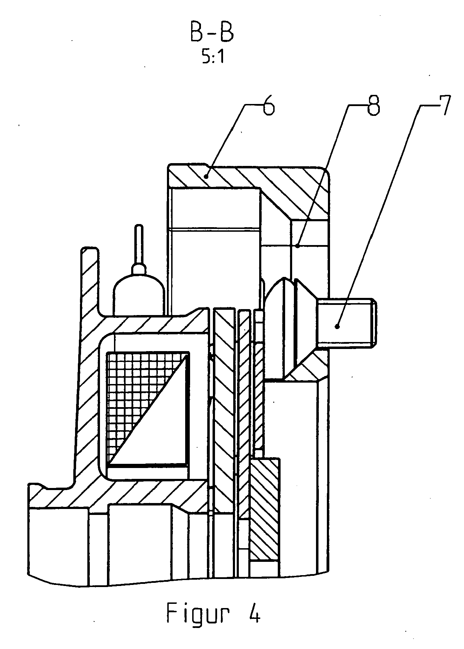

Figur 4 zeigt einen Schnitt B-B durch die Anschraubung des Gegenflansches 6 mittels Befestigungsschraube-Motor 7, welche sich in einem Langloch 8 befindet an das hier nicht dargestellte Motorengehäuse.

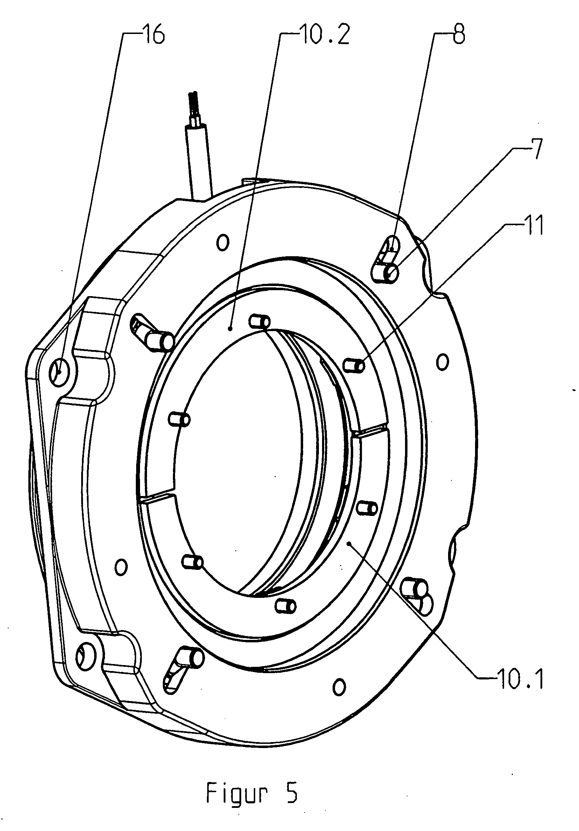

Figur 5 zeigt ein Schrägbild der Bremse von der Rückseite, an welche sie an das Motorengehäuse mittels Befestigungsschrauben-Motor 7 angeschraubt wird.
Figur 6 zeigt eine Schrägansicht von der Vorderseite der Bremse, aus welcher die Form des Gegenflansches 6 ersichtlich ist und der Spulenträger 1 mittels Schrauben 9 an den Gegenflansch 6 verschraubt wird. Außerdem ist die Belagmitnehmerscheibe 10 mit geteiltem Distanzring 10.1 und 10.2, welche an die Motorwelle zur Drehmomentübertragung angeschraubt wird, von der Rückseite dargestellt.

### Funktion:

Wird auf die Spule 2, welche sich im Spulenträger 1 befindet, Strom gegeben, entsteht ein elektromagnetisches Feld, welches die Ankerscheibe 3, welche auf den Bolzen 13 axial beweglich ist, gegen den Federdruck der Druckfedern 12 angezogen. Somit kann sich die Belagmitnehmerscheibe 10 mit den darin befindlichen Reibbelagplättchen 4 frei drehen. Diese wird mit dem geteilten Distanzring 10.1 und 10.2 und mit entsprechenden Befestigungsschrauben-Belagmitnehmerscheibe 11 an die zu drehende Motorwelle angeschraubt.

Wird nun der Strom von der Spule 2 weggenommen, wird die Ankerscheibe 3 über die Druckfedern 12 axial gegen die Reibbelagplättchen 4, sowie diese gegen den Gegenflansch 6 gedrückt, wodurch die Belagmitnehmerscheibe 10 abgebremst wird. Nach dem die Bremse mit den Befestigungsschrauben-Motor 7 am Motorgehäuse befestigt ist und stillsteht, wird das Drehmoment an diesen Befestigungsschrauben-Motor 7 aufgenommen. Die Übertragung erfolgt von der Ankerscheibe 3 über die Bolzen 13 auf den Gegenflansch 6, welcher mit dem Motorgehäuse befestigt ist und mit den Befestigungsbohrungen 16 im Gegenflansch 6 am Roboterarm angeschraubt wird.

### Bezugszeichenliste:

- 1: Spulenträger
- 1.1: Bund Spulenträger
- 2: Spule
- 3: Ankerscheibe
- 4: Reibbelagplättchen
- 5: Reibscheibe
- 6: Gegenflansch
- 7: Befestigungsschrauben - Motor
- 8: Langloch
- 9: Schrauben
- 10: Belagmitnehmerscheibe
- 10.1: Distanzring zweiteilig - untere Hälfte
- 10.2: Distanzring zweiteilig - obere Hälfte
- 11: Befestigungsschrauben - Belagmitnehmerscheibe
- 12: Druckfedern
- 13: Bolzen
- 14: umlaufende Nut außen
- 15: umlaufende Nut innen
- 16: Befestigungsbohrungen - Roboterarm

## Patentansprüche

1. Elektromagnetische Federdruckbremse mit einem Spulenträger (1) mit einer darin festen Spule (2) zum Lüften der Bremse, sowie mit einer zusammenwirkenden Ankerscheibe (3), die von, am Umfang angeordneten Druckfedern (12), von diesen axial weggedrückt wird und die Ankerscheibe (3) auf Bolzen (13) axial geführt ist,
**dadurch gekennzeichnet, dass** die Form und das Material des Spulenträgers (1) mit der darin enthaltenen Spule (2) gewichtsoptimiert und magnetflussoptimiert ausgeführt ist, und dass am Außenumfang des Spulenträgers (1) sich die Druckfedern (12) im Freien befinden und auf einem Bolzen (13), welche in einem Gegenflansch (6) eingepresst sind, geführt werden, wobei die Gegenabstützung der Druckfedern (12) an dem Bund (1.1) des Spulenträgers (1) erfolgt.

2. Bremse nach Anspruch 1,
**dadurch gekennzeichnet, dass** der Gegenflansch (6) aus einem leichten Material wie Aluminium gefertigt wird und eine Reibscheibe (5) aufgeklebt wird zur Aufnahme des Bremsmomentes.

3. Bremse nach Anspruch 1,
**dadurch gekennzeichnet, dass** der Gegenflansch (6) direkt als Motorgehäuse ausgebildet wird und die Bremse mit Schrauben (9) angeschraubt wird.

## Claims

1. Electromagnetic spring-loaded brake comprising a bobbin (1) having a stationary coil (2) mounted therein for disengaging the brake and an armature disk (3) cooperating therewith, said armature disk being urged towards an axially outward position by a plurality of peripherally disposed compression springs (12) and said armature disk (3) being guided for axial movement on pins (13), **characterized in that** the shape and the material of the bobbin (1) and the coil (2) therein are configured for optimum weight and for optimum magnetic flux, and **in that** compression springs (12) are exposed along the periphery of coil carrier (1) and each is guided on a pin (13) force-fitted into a counter-flange (6), wherein support of the compression springs (12) occurs at the flange (1.1) of the bobbin (1).

2. Brake according to claim 1, **characterized in that** the counter-flange (6) is made of a light-weight material such as aluminum having a friction liner (5) bonded thereto for absorbing the braking torque.

3. Brake according to claim 1, **characterized in that** the counter-flange (6) is formed directly as motor housing and the brake is screwed on by way of bolts (9).

## Revendications

1. Frein à pression de ressorts électromagnétique, comprenant un porte-bobine (1) avec une bobine fixe (2) intérieure pour le desserrage du frein, ainsi qu'un disque d'induit (3) coopérant, qui est repoussé dans la direction axiale par des ressorts de pression (12) disposés sur le pourtour, et le disque d'induit (3) est guidé dans la direction axiale sur des axes (13), **caractérisé en ce que** la forme et le matériau du porte-bobine (1) avec la bobine (2) contenue dans ce dernier sont optimisés en poids et en flux magnétique, et que les ressorts de pression (12) se situent à l'air libre sur le pourtour extérieur du porte-bobine (1) et sont guidés sur des axes (13) emmanchés dans une contre-bride (6), le support antagoniste des ressorts de pression (12) s'effectuant sur le collet (1.1) du porte-bobine (1).

2. Frein suivant la revendication 1, **caractérisé en ce que** la contre-bride (6) est fabriquée en un matériau léger, tel que l'aluminium, et un disque de friction (5) est collé pour absorber le couple de freinage.

3. Frein suivant la revendication 1, **caractérisé en ce que** la contre-bride (6) est réalisée directement sous forme de carter moteur et le frein est vissé par des vis (9).
